# EUROPEAN PATENT APPLICATION

(11) **EP 4 813 582 A1**
(43) Date of publication of application: **30.09.2026**
(21) Application number: 25172965.3
(22) Date of filing: 28.04.2025
(51) Int. Cl.: B25J 9/16

(54) **METHOD AND SYSTEM FOR CONTROLLING A PICKING STATION**

(30) Priority: 28.03.2025 GB 202504645
(71) Applicant: Ocado Innovation Limited, Hatfield, Hertfordshire AL10 9UL (GB)
(72) Inventor: POPOV, Ivaylo, Hatfield, Hertfordshire, AL10 9UL (GB); BOTEV, Georgi, Hatfield, Hertfordshire, AL10 9UL (GB)
(74) Representative: Ocado Group IP Department

(57) **Abstract**

A computer-implemented method and system of controlling a picking station, is disclosed.

## Description

### Technical Field

The present disclosure relates generally to the field of picking stations for use in warehouses or fulfilment centres.

### Background

Some commercial and industrial activities require systems that enable the storage and retrieval of a large number of different products. For example, WO2015/185628A2 (Ocado) describes an automated storage and fulfilment system (ASRS) in which stacks of storage containers are arranged within a grid storage structure. The containers are accessed from above by load-handling devices operative on rails or tracks located on the top of the grid storage structure. The load-handling devices may be those described in WO2015/019055A1 (Ocado). In such an ASRS, items within the containers may be accessed by robotic picking stations that use a robotic manipulator or arm, such as those described in WO2017081281A1 (Ocado).

Within the storage and fulfilment system, it is important that robotic picking stations can automatically transfer items between containers with speed and accuracy. It is against this background that the present invention has been devised.

### Summary

In a first aspect, there is a computer-implemented method of controlling a picking station operational on a grid comprising a plurality of grid cells, the grid forming part of a grid-based storage system, the picking station comprising a robotic manipulator, wherein the robotic manipulator is configured to transfer items between containers received in respective grid cells adjacent the robotic manipulator, the method comprising:
obtaining an image of the picking station, wherein the image comprises an overlay comprising instructions to effect transfer of an item between containers received in the respective grid cells;
processing the image with a model trained to control the robotic manipulator to transfer an item between containers received in the respective grid cells; and
using the model to control the robotic manipulator to transfer an item between containers received in the respective grid cells. This means the robotic manipulator can move items between containers at increased speed and accuracy. In particular, the model mimics human behaviour that could otherwise be used to control the robotic manipulator.

The instructions may comprise at least one of at least one reference image of an item to be transferred, and/or a path along which an item to be transferred, moves, and/or a status of the robotic manipulator. The least one reference image may comprise a robotic manipulator engaged with an item substantially identical to the item to be transferred and/or an item alone substantially identical to the item to be transferred. The path may comprise at least one of a representation of the respective grid cells wherein the representation is modified to indicate the path, and/or a direction in which the robotic manipulator should move, and/or a location within a container in and/or from which an item should be placed and/or removed. The status of the robotic manipulator may comprise at least one of a warning signal indicating whether the robotic manipulator is functioning correctly, and/or an indication whether a distal end of an end-effector of the robotic manipulator is above and/or below a top-surface of the grid, and/or a location of a tool centre point of the robotic manipulator, and/or an engagement state of an end-effector of the robotic arm to indicate the extent to which an item is gripped by the end-effector and/or whether more than one item has been gripped. This means the overlay can provide a visual element that serves as a specific instruction for the robotic manipulator to execute via the model. The extent to which each piece of information and respective elements is required will depend on the context such as the range of items that have to be transferred, the number of grid cells in the picking station, and the complexity of the robotic manipulator. In general, using fewer pieces of information and elements represents a trade-off with reduced but acceptable speed and accuracy. However, the time taken to train the model is reduced.

The overlay may be updated in real-time. This means the model controls the robotic manipulator in real-time.

The robotic manipulator may comprise an end effector, wherein the end effector has full mechanical degrees of freedom via orientation of the end-effector and/or via orientation of the robotic manipulator, wherein using the model to control the robotic manipulator comprises controlling the end-effector to move and/or grip and/or release an item. The end-effector may comprise a gripping element, wherein using the model to control the robotic manipulator comprises controlling the gripping element to grip and/or release an item.

The picking station may comprise an image sensor, wherein obtaining the image of the picking station comprises obtaining an image from the image sensor. The end-effector may comprise the image sensor.

Obtaining the image may comprise combining an image from the image sensor and the overlay.

The picking station may comprises *n-by-n* or *n-by-m* grid cells and the robotic manipulator is operational about a centre location of the *n-by-n* or *n-by-m* grid cells.

The model may comprise a convolutional neural network comprising an input to receive the image, and an output to control the robotic manipulator.

In a second aspect, there is a system comprising:
a grid comprising a plurality of grid cells forming part of a grid-based storage system;
one or more picking stations mounted on the grid, each picking station comprising a robotic manipulator and an image senor, wherein the robotic manipulator is configured to transfer items between containers received in respective grid cells adjacent the picking station; and
a processor configured to carry out the method of any previous aspect.

In a third aspect, there is a computer-implemented method of training a model to control a picking station operational on a grid comprising a plurality of grid cells, the grid forming part of a grid-based storage system, the picking station comprising a robotic manipulator, wherein the robotic manipulator is configured to transfer items between containers received in respective grid cells adjacent the robotic manipulator, the method comprising:
obtaining an image of the picking station, wherein the image comprises an overlay comprising instructions to effect transfer of an item between containers received in the respective grid cells;
obtaining instructions controlling the robotic manipulator to effect transfer of an item between containers received in respective grid cells adjacent the picking station as the image is generated;
correlating the image with the instructions controlling the robotic manipulator to generate training data;
using the training data to train a convolutional neural network; and
obtaining, based on the convolutional neural network, a trained model to generate instructions to effect transfer of an item between containers received in respective grid cells adjacent the picking station in response to an overlay comprising instructions to effect transfer of an item between containers received in the respective grid cells. This means the model can be trained in an efficient way to imitate a highly skilled operator who could otherwise control the robotic manipulator.

The instructions may be obtained in response to an operator, such as a human operator, controlling the robotic manipulator. The robotic manipulator may comprise an interface and a manual control device, wherein the operator controls the robotic manipulator via a manual control device and the interface.

The method of the first aspect may use the model trained according to the third aspect.

In another aspect, there is a computer program comprising instructions which, when the program is executed by a computer, cause the computer to carry out the method of any previous aspect.

In another aspect, there is a computer readable medium comprising the computer program.

In another aspect, there is a data processing system comprising means for carrying out the method of any previous aspect.

### Brief Description of Drawings

The invention is described with reference to the accompanying drawings, wherein:
Figure 1 shows an automated storage and retrieval system that uses load-handling devices;
Figure 2 shows a single load-handling device with container-lifting means in a lowered configuration;
Figure 3 shows a picking station;
Figure 4 shows an end-effector that may be used in a picking station;
Figure 5a shows a method of controlling a picking station;
Figure 5b shows how the method of Figure 5b may be implemented;
Figures 6a-e show how an overlay can be used to control a robotic picking station;
Figure 7 shows a method of training a model for controlling a picking station;
Figure 8 shows how the method of Figure 7 may be implemented; and
Figure 9 shows an example processing system for implementing aspects described herein.

### Detailed Description

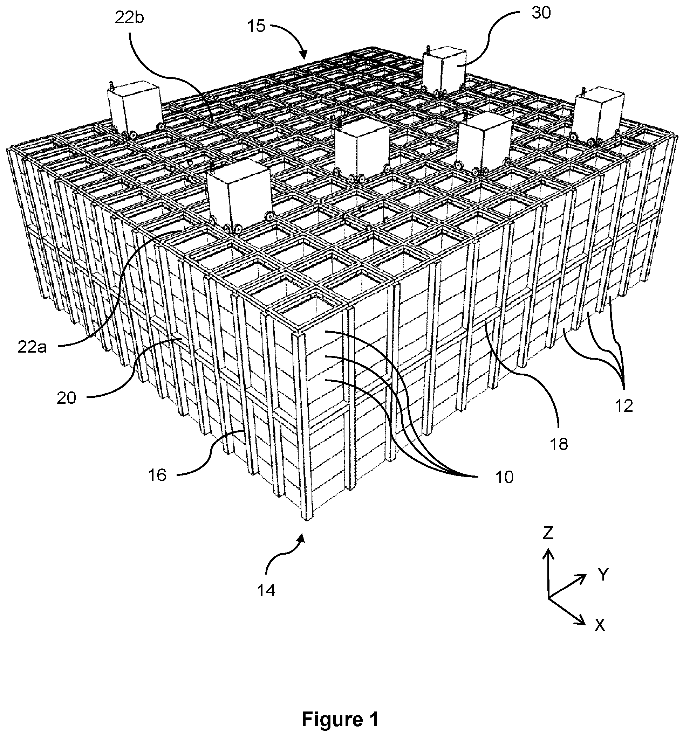

WO2015/185628A (Ocado), hereby incorporated by reference, describes a known ASRS in which stacks of containers are arranged within a grid framework structure. The containers are accessed by one or more load-handling devices, otherwise known as "bots", operative on tracks located on the top of the grid framework structure. A system of this type is illustrated schematically in Figure 1.

As shown in Figure 1, stackable containers 10, also known as "bins" or "totes", are stacked on top of one another to form stacks 12. The stacks 12 are arranged in a grid framework structure 14. The grid framework structure 14 is made up of a plurality of storage columns or grid columns. Each grid in the grid framework structure has at least one grid column to store a stack of containers. Each bin 10 typically holds a plurality of product items (not shown).

The grid framework structure 14 comprises a plurality of upright members 16 that support horizontal members 18, 20. A first set of parallel horizontal grid members 18 is arranged perpendicularly to a second set of parallel horizontal members 20 in a grid pattern to form a horizontal grid structure 15 supported by the upright members 16. The members 16, 18, 20 are typically manufactured from metal. The bins 10 are stacked between the members 16, 18, 20 of the grid framework structure 14, so that the grid framework structure 14 guards against horizontal movement of the stacks 12 of bins 10 and guides the vertical movement of the bins 10.

The top level of the grid framework structure 14 comprises a grid or grid structure 15, including rails 22 arranged in a grid pattern across the top of the stacks 12. The rails or tracks 22 guide a plurality of load-handling devices 30. A first set 22a of parallel rails 22 guide movement of the robotic load-handling devices 30 in a first direction (e.g. a Y-direction along track 22a) across the top of the grid framework structure 14. A second set 22b of parallel rails 22, arranged perpendicular to the first set 22a, guide movement of the load-handling devices 30 in a second direction (e.g. an X-direction along track 22b), perpendicular to the first direction. In this way, the rails 22 allow the robotic load-handling devices 30 to move laterally in two dimensions in the horizontal X-Y plane. A load-handling device 30 can be moved into position above any of the stacks 12.

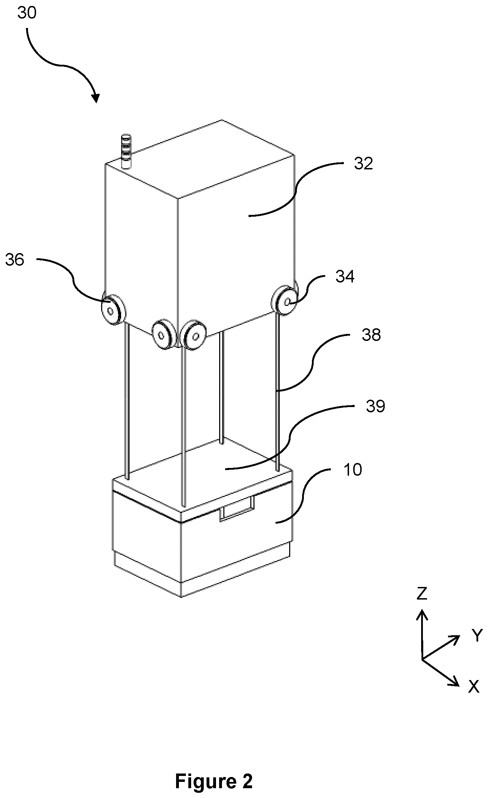

An example load-handling device 30 shown in Figure 2 is described in WO2015/019055 (Ocado), hereby incorporated by reference. The load-handling device 30 comprises a vehicle 32, which is arranged to travel on the rails 22 of the frame structure 14. A first set of wheels 34, consisting of a pair of wheels 34 on the front of the vehicle 32 and a pair of wheels 34 on the back of the vehicle 32, is arranged to engage with two adjacent rails of the first set 22a of rails 22. Similarly, a second set of wheels 36, consisting of a pair of wheels 36 on each side of the vehicle 32, is arranged to engage with two adjacent rails of the second set 22b of rails 22. Each set of wheels 34, 36 can be lifted and lowered, by way of a direction-change assembly, so that either the first set of wheels 34 or the second set of wheels 36 is engaged with the respective set of rails 22a, 22b at any one time. For example, when the first set of wheels 34 is engaged with the first set of rails 22a and the second set of wheels 36 is lifted clear from the rails 22, the first set of wheels 34 can be driven, by way of a drive assembly housed in the vehicle 32, to move the load-handling device 30 in the Y-direction. To achieve movement in the X-direction, the first set of wheels 34 is lifted clear of the rails 22, and the second set of wheels 36 is lowered into engagement with the second set 22b of rails 22. The drive assembly can then be used to drive the second set of wheels 36 to move the load-handling device 30 in the X direction.

The load-handling device 30 is equipped with a container-lifting device or assembly, e.g. a crane mechanism, to lift a storage container from above. The lifting device comprises a winch tether or cable 38 wound on a spool or reel and a gripper device 39. The lifting device shown in Figure 2 comprises a set of four lifting tethers 38 extending in a vertical direction. The tethers 38 are connected at or near the respective four corners of the gripper device 39, e.g. a lifting frame, for releasable connection to a storage container 10. The gripper device 39 is configured to releasably grip the top of a storage container 10 to lift it from a stack of containers in a storage system of the type shown in Figure 1.

To remove a bin 10 from the top of a stack 12, the load-handling device 30 is first moved in the X- and Y-directions to position the gripper device 39 above the stack 12. The gripper device 39 is then lowered vertically in the Z-direction to engage with the bin 10 on the top of the stack 12. The gripper device 39 grips the bin 10, and is then pulled upwards by the cables 38, with the bin 10 attached. At the top of its vertical travel, the bin 10 is held above the rails 22 accommodated within the vehicle body (or skeleton) 32. In this way, the load-handling device 30 can be moved to a different position in the X-Y plane, carrying the bin 10 along with it, to transport the bin 10 to another location. On reaching the target location (e.g. another stack 12, an access point in the storage system, or a conveyor belt) the bin or container 10 can be lowered from the container receiving portion and released from the grabber device 39.

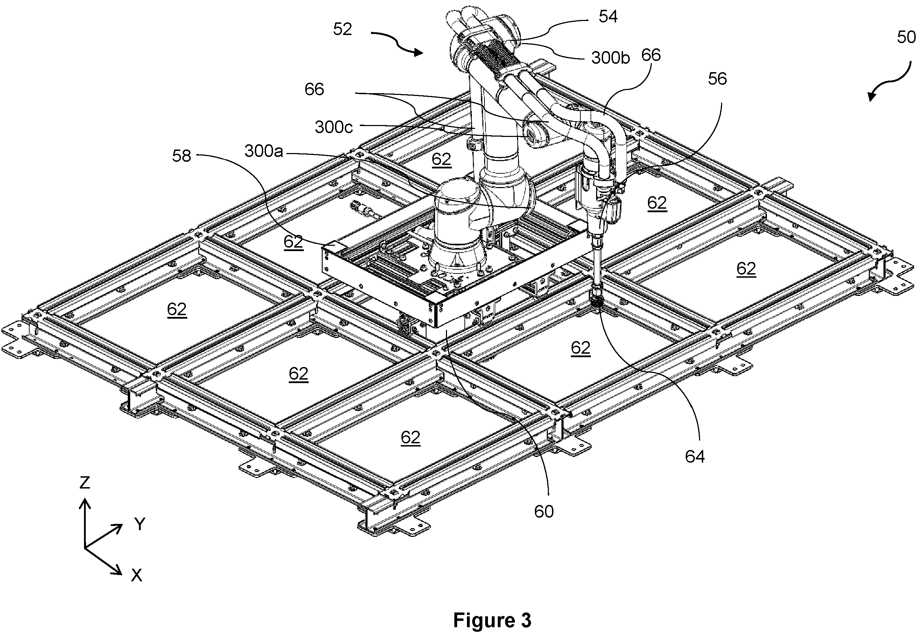

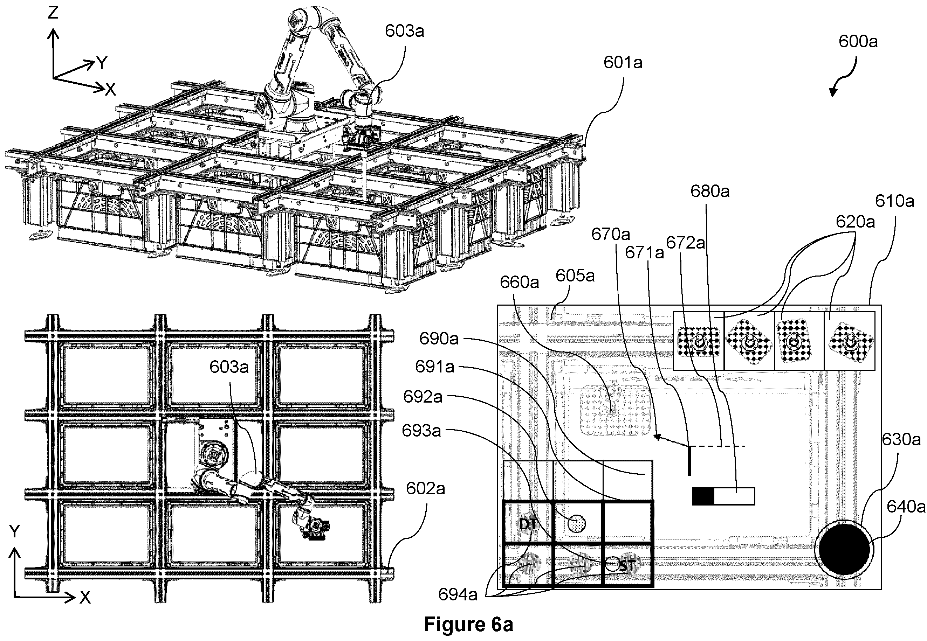

With reference to Figure 3, the ASRS may further comprise a robotic picking station 50 operational on top of the storage and retrieval structure 1, e.g. alongside the load-handling devices 30 (not shown). In this example, the robotic picking station is mounted on the grid but could be alternatively suspended on a rail system for example for operation on top of the storage and retrieval structure. The robotic picking station 50 comprises a robotic manipulator 52 comprising a robotic arm 54 and an end effector 56 for releasably engaging an item to be manipulated, together with several designated grid cells 60, 62. The end effector 56 may be a suction device 64 connected to a vacuum source by a vacuum line within trunking 66. Although in this example a suction device performs a gripping action of an item, any suitable end-effector such as mechanical grippers may be used for the gripping action. The robotic manipulator 52 is mounted on a plinth 58 above a single grid cell 60 and, depending on its location on the structure 1, can be surrounded by up to eight other grid cells 62 as shown in Figures 3 and 6a-e. In general, the robotic manipulator 52 is configured to pick an item or product from any one of the containers located in one of the designated grid cells 62 and place it in a container located in another of the designated grid cells 62. The load-handling devices collect containers from, and deliver them to, the designated grid cells 62 as necessary. In this way, the robotic picking station 50 and the load-handling devices 30 work in conjunction via the master controller to fulfil a customer order or redistribute products throughout the storage and retrieval system 1.

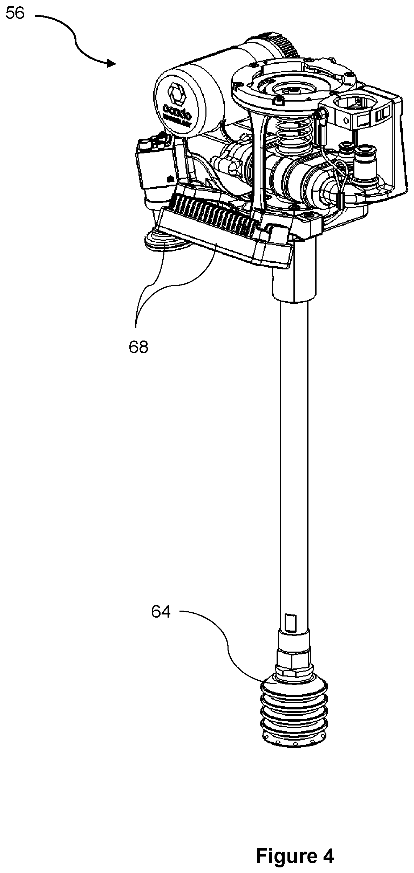

With reference to Figure 4, the end effector 56 comprises a suction device 64 and an integrated vacuum generator, both of which form part of a suction assembly. The vacuum generator is supplied by a pressurised fluid, which is used to produce a vacuum or suction pressure to releasably engage an object or item with the suction device 64. The suction assembly, and in particular the vacuum assembly may involve filters. A vacuum pressure line within trunking 66 is used to route the pressurised fluid along the robotic arm 54 from a pressure source, possibly located at ground level at the bottom of the framework structure 1, to the end effector 56 through the framework structure 1. Although not shown, the end effector 56 might include a parallel jaw gripper or the like for manipulating objects. The parallel jaw gripper may be in addition to or instead of the suction device 64. Moreover, the robotic manipulator 52 may also include one or more vision systems or image sensors 68 (e.g. cameras) to facilitate its control via an Artificial Intelligence (AI) or Machine Learning (ML) based vision system. It will be appreciated that the vision systems or image sensors need not be located on the end effector and can be located on the robotic arm instead.

A picking station on top of the storage and retrieval structure provides the most efficient point to carry out a picking operation. Absent this, the containers would have to continually exit and enter the ASRS to perform a picking operation via the access point, which typically is located at a bottom of the grid framework structure. This may involve lowering and raising containers over a significant height a significant number of times with a corresponding power demand. The location of the picking station alone increases the throughput of the system. Also, the rate at which the robotic manipulator can transfer items between containers is key for the throughput of the system. It is desirable to automate the robotic manipulator to transfer items between containers with maximum speed and accuracy, and in particular using an Artificial Intelligence (AI) or Machine Learning (ML) based vision system, with a reduced training burden, which in turn lowers power demand further.

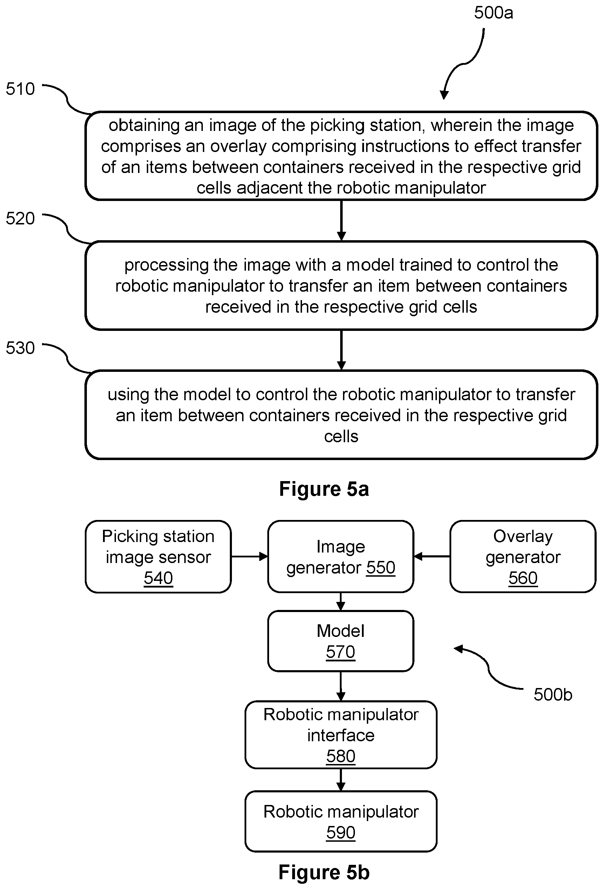

With reference to Figure 5a, a method 500a according to an aspect is described. The method is used for controlling a picking station operational on a grid comprising a plurality of grid cells, the grid forming part of a grid-based storage system, the picking station comprising a robotic manipulator, wherein the robotic manipulator is configured to transfer items between containers received in respective grid cells adjacent robotic manipulator . In general, the robotic manipulator has a number of joints (i.e. points of articulation) 300a-c to enable full mechanical degrees of freedom. That is, the end effector can 'point' in any direction along the XYZ axes in Figure 3, and rotate in pitch, roll, and yaw along an axis of the XYZ axes. Whilst the example in Figure 3 shows three joints, it will be appreciated more or fewer joints may be used.

In step 510, an image of the picking station is obtained. The image comprises an overlay comprising instructions to effect transfer of an item between containers received in the respective grid cells. An example overlay is described below in reference to Figures 5b and 6a-d.

In step 520, the image obtained in step 510 is processed with a model trained to control the robotic manipulator to transfer an item between containers received in the respective grid cells. An overlay can be thought of as comprising at least one visual element used to convey information and/or the instructions. The model has been trained to interpret the image comprising the overlay such that it can control the robotic manipulator accordingly. An example way of training the model is described below where the model learns to mimic human control of the robotic manipulator.

In step 530, the model is then used to control the robotic manipulator to transfer an item between containers received in the respective grid cells. That is, based on how the model interprets the image comprising the overlay, the robotic manipulator will proceed to transfer an item between containers. It has been found the claimed method can transfer about 90% of a group of items, such as grocery, faster than a human operator controlling the picking station.

With reference to Figure 5b, a system 500b according to an aspect is described. Figure 5b shows a system 500b that may be used to carry out the method of Figure 5a. An output of a picking station image sensor 540 is combined with an output of an overlay generator 560 by image generator 550. The picking station image sensor 540 may be an image sensor located on an end-effector of the robotic manipulator or on the robotic manipulator itself. Alternatively the image sensor may be used above the picking station. In any case, the image sensor of the picking station is used to generate a real-time feed or video of the picking station. The overlay generator is used to provide an overlay with instructions to effect an item transfer between containers. The overlay is thus updated in real-time based on when an item is to be transferred and with each subsequent item. Image generator 550 thus combines the real-time image from the image sensor and the real-time overlay from the overlay generator. The image generator can be used to obtain the image for step 510.

Model 570 may implement steps 520 and 530 by receiving as an input the image from image generator. The model may be a convolutional neural network trained as described below. The model's output is processed by a robotic manipulator interface 580 which controls the robotic manipulator accordingly in line with step 530. One suitable interface and robotic manipulator may be those provided by Universal Robots (RTM) and in particular the "Control box" and "UR10" (https://www.universal-robots.com/media/1801323/enq 199901 ur10 tech spec web a4.pdf).

With reference to Figures 6a-e, aspects are described. Figures 6a-e show example overlays and systems 600a-e respectively that may be used by the method and systems of Figures 5a and 5b. In Figure 6a, 610a shows a real-time overlay corresponding to an item to be transferred using the corresponding picking station is shown in 601a and 602a with the current configuration of robotic manipulator 603a with an end-effector (similar to that shown in Figures 3 and 4). The example overlays are shown with respect to a picking station in which 3-by-3 cells are used and the robotic manipulator operates about the central cell. In principle, any number of cells may be used provided the robotic manipulator can access the containers therein to move items between the containers, such as *n-by-n* or *n-by-m* cells.

The overlay 610a has been combined with a real-time feed 605a (shown in grey) from the image sensor of the picking station to obtain the image used in step 510 as described with reference to Figure 5b. 605a corresponds to the current location of the end-effector as shown in 601a and 602a (any item engaged by the end-effector is not shown in 601a and 602a for simplicity).

In overlay 610a, there is a series of reference images 620a of an item to be transferred. In this example, the reference items show the item in different configurations but engaged by the end effector. The reference images thus correspond to an image that would be obtained from an image sensor of the picking station when the end effector is engaged with a substantially identical item. The reference images differ by the specific configuration and orientation of the item with respect to the end effector (and in this way is a variation of what is currently being observed in the real-time feed from the image sensor of the picking station, such as 660a, which shows the end-effector currently engaged with an item). One item is shown for simplicity, but it will be appreciated that each of the containers may have multiple items and/or items of a different type therein. Alternatively and/or additionally a reference image may be of the identical item alone without the end effector. Although in this example, four different reference images are shown, the number is not essential and in principle one image may be used. In general, the purpose of having at least one reference image shows how an item should be engaged by the end-effector and/or what the item alone looks like that should be engaged by the end-effector.

Additionally and/or alternatively, there are also elements that show a path along which an item to be transferred, moves. Element 690a is a representation of the grid cells shown in 601a and 602a. The origin cell/container is denoted by ST (supply tote) and the destination cell/container is denoted by DT (delivery tote) in this example. Therefore, the mere denotation of the origin and destination cells/containers can be said to indicate the path. Additionally and/or alternatively, elements 694a can indicate the preferred path of movement. In this example, the arrangement of elements 694a indicates the path towards the destination cell/container. Accordingly, the arrangement of elements 694a can be said to indicate the path. Additionally and/or alternatively, the cells within which the robotic manipulator should move to transfer the item may be highlighted as shown by 691a. Accordingly, the mere highlighting of cells can be said to indicate the path. Therefore each of elements 691a, 694a, ST, and DT can all be said to modify the representation 690a to indicate the path.

Additionally and/or alternatively, the current direction 670a from the origin cell/container to the destination cell/container can be indicated, which in this example is an arrow corresponding to a line between where the end effector is at and the destination cell/container. The line with thus update in real-time as the end-effector moves. Accordingly, the mere indicating of the current direction can be said to indicate the path.

Additionally and/or alternatively, element 680a can indicate a more specific destination location for the item. In this example, element 680a has three locations in which the black element can be located. Given the black square is located at a leftmost portion of element 680a, this indicates that the item should be placed in a leftmost portion of the destination cell/container. In this example, the leftmost portion corresponds to the bottom third of the destination cell/container in the X-Y plane as shown in 602a. Similarly, if the black square is located in the central portion of element 680a, the item should be placed in the central third, adjacent the leftmost third, of the destination cell/container in the X-Y plane as shown in 602a. Similarly, if the black square is located in the rightmost portion of element 680a, the item should be placed in the rightmost third, adjacent the central third, of the destination cell/container in the X-Y plane as shown in 602a. Element 680a may be useful when respective carrier bags are in the respective thirds of the destination cell/container. Accordingly, the mere indicating of a specific destination can be said to indicate the path. It will be appreciate that the terms left, central, and right are relative terms.

Additionally and/or alternatively, there are also elements that show a current status of the robotic manipulator. Element 692a can indicate the operational status of the robotic manipulator. By way of example, if element 692a is green, this can indicate a fully operational state, whereas if element 692a is red, a malfunctioning state is indicated. Element 692a may be seen as a warning indicator. Additionally and/or alternatively, element 693a can indicate the current tool centre point of the end effector. Additionally and/or alternatively, elements 630a and 640a can indicate the extent to which the end-effector has gripped the item. In this example, the bigger element 640a, the more effective the current grip. Additionally and/or alternatively, element 671a can indicate the extent to which a distal end of the end-effector is above or below a top surface of the grid. Line 672a is not part of the overlay but is shown to depict a point about which element 671a moves. In this example, the distal end of the end-effector is below the top surface of the grid to the extent indicated by its length below element 627a. Element 671a may be red to indicate this. It can be appreciated each of elements 692a, 693a, 630a, 640a, 671a all indicate a status of the robotic manipulator, and can be generated from sensors and/or feedback mechanisms of the robotic manipulator.

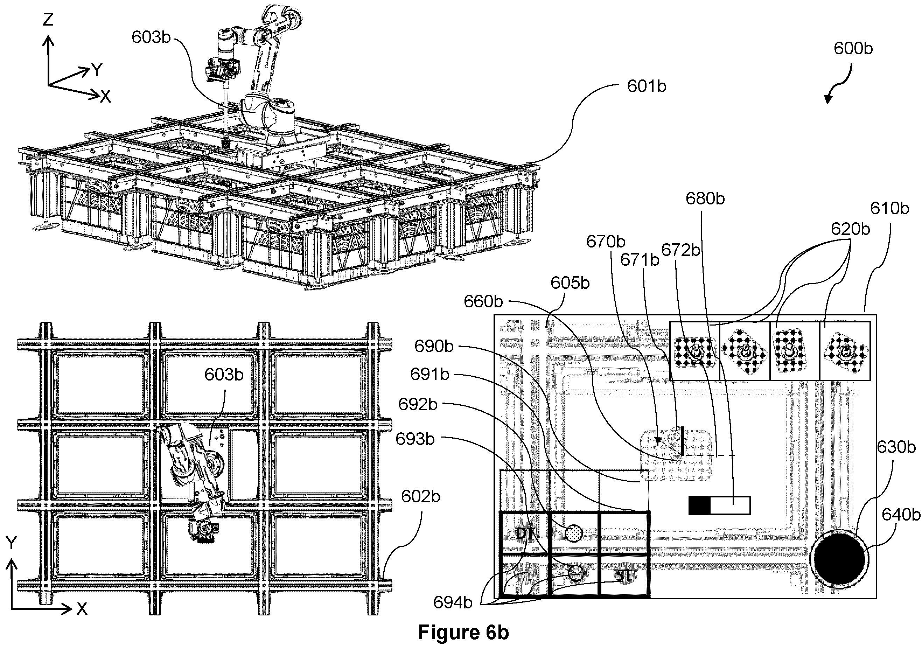

Figure 6b shows how overlay 610a is updated to overlay 610b as the robotic manipulator moves. The reference signs in Figure 6b correspond to what is shown in Figure 6a, but use the suffix b instead of a. Therefore, as the robotic manipulator moves along the path, element 693b shows the updated current tool centre point of the end-effector. Similarly, element 670b has updated to indicate the relative direction of the destination cell/container. Similarly, element 671b has updated to indicate the distal end of the end-effector is now above the top surface of the grid to the extent shown by its length above element 672b. In this example, element 671b may be green. Accordingly, the real-time feed from the image sensor of the picking station shows an updated location of the item with which the end-effector is engaged as shown by 660b.

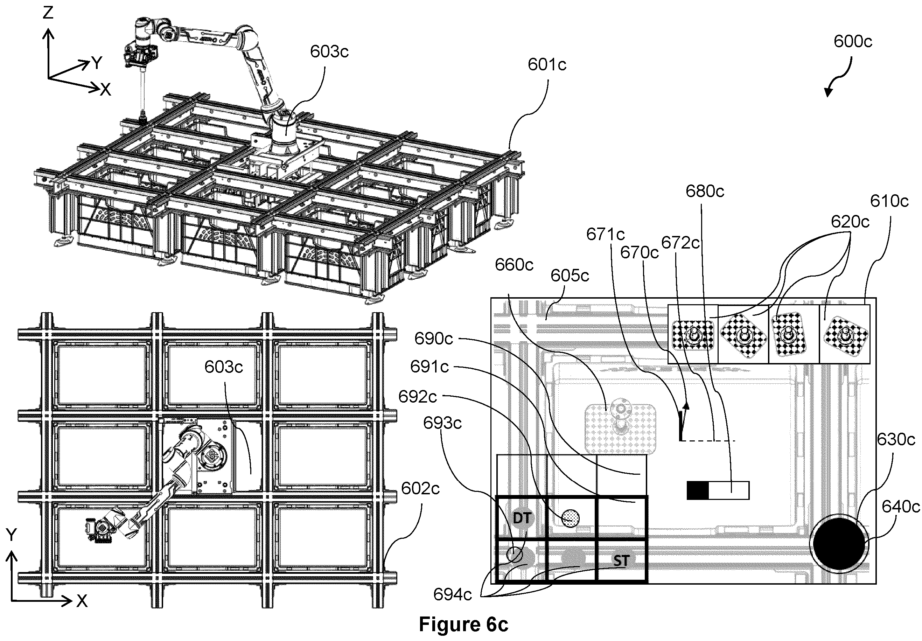

Figure 6c shows how overlay 610b is updated to overlay 610c as the robotic manipulator moves. The reference signs in Figure 6c correspond to what is shown in Figure 6b, but use the suffix c instead of b. Therefore, as the robotic manipulator moves along the path, element 693c shows the updated current tool centre point of the end-effector. Similarly, element 670c has updated to indicate the relative direction of the destination cell/container. Similarly, element 671c has updated to indicate the distal end of the end-effector is now above the top surface of the grid to the extent shown by its length above element 672c. In this example, element 671c may be green. Accordingly, the real-time feed from the image sensor of the picking station shows an updated location of the item with which the end-effector is engaged as shown by 660c.

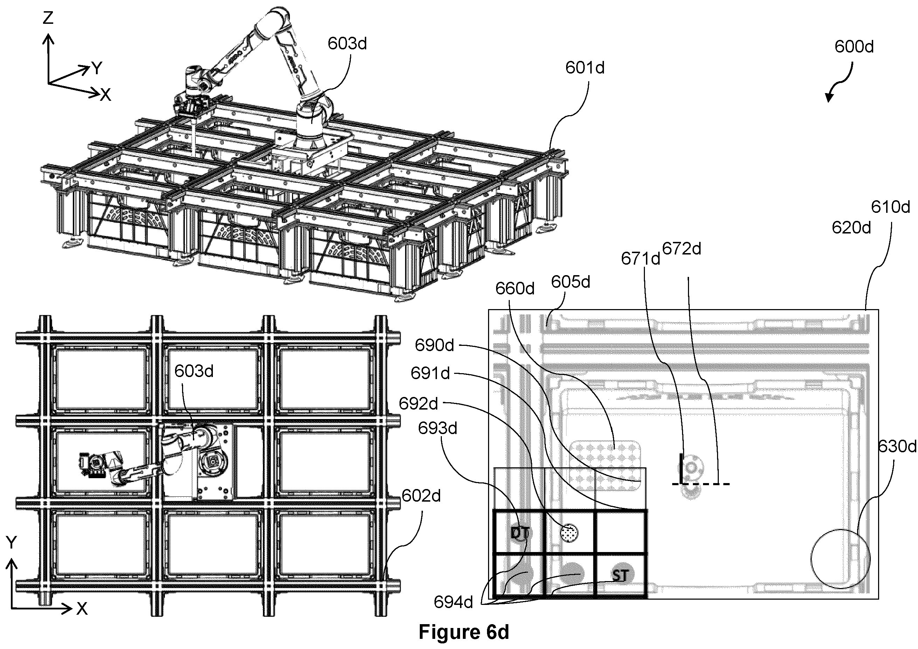

Figure 6d shows how overlay 610c is updated to overlay 610d as the robotic manipulator moves. The reference signs in Figure 6d correspond to what is shown in Figure 6c, but use the suffix d instead of c. Therefore, as the robotic manipulator moves along the path, element 693d shows the updated current tool centre point of the end-effector. Similarly, elements 670c and 680c have disappeared (i.e. there are no elements 670d and 680d) since the item has been deposited in the leftmost third of the destination cell/container as explained above. Similarly, element 671d has updated to indicate the distal end of the end-effector is now above the top surface of the grid to the extent shown by its length above element 672d, having deposited the item (see 605d in which the end-effector is located near elements 671d and 672d). In this example, element 671d may be green.

Accordingly, the real-time feed from the image sensor of the picking station shows an updated location of the item with which the end-effector is no longer engaged as shown by 660d. Therefore, element 640c has disappeared (i.e. there is no element 640d) since the end-effector is no longer engaged with the item. Finally, element 620c has disappeared (i.e. there is no element 620d) since the item substantially identical to the one displayed has been placed in the destination cell/container, awaiting an updated element 620 for the next item to be transferred.

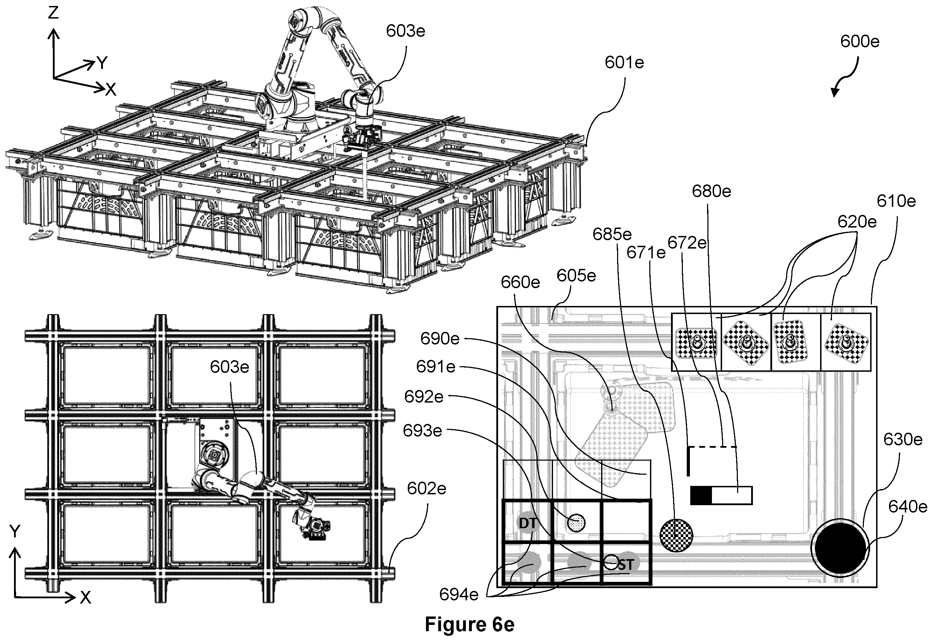

Figure 6e shows an alternative overlay 610e that may appear instead of overlay 610a. The reference signs in Figure 6e correspond to what is shown in Figure 6a, but use the suffix e instead of a. 610e is presented when the end-effector incorrectly grips an item, resulting in the gripping of two item instead of one ("double pick"), as shown by 660e in the real-time feed 605e from the image sensor or the picking station. This may happen when the items are bags for example. Accordingly, element 685e appears to indicate the incorrect gripping state to which the model responds by controlling the robotic manipulator and end-effector to return the items to the origin cell/container. The model will then control the robotic manipulator and end-effector to attempt to correctly grasp a single item. Element 670a may also disappear (i.e. there is no element 670e) to indicate the incorrect gripping state.

The sequence of overlays shown in Figures 6a-e can then be updated for the next item to be transferred. It will be appreciated each of the overlays shown in Figures 6a-e are merely examples in which at least one of three pieces of information can be conveyed:
- at least one reference image of an item to be transferred; and/or
- a path along which an item to be transferred, moves; and/or
- a current status of the robotic manipulator.

The extent to which each piece of information and respective elements is required will depend on the context such as the range of items that have to be transferred, the number of grid cells in the picking station, and the complexity of the robotic manipulator. In general using fewer pieces of information and elements represents a trade-off with reduced but acceptable speed and accuracy. However, the time taken to train the model as detailed below is reduced.

It will also be appreciated that any of the elements shown are not fixed to the depicted locations and can be moved as appropriate. Further, the elements can be redesigned as a matter of course including their shape and/or layout and/or colours.

It will also be appreciated the overlay and specific elements therein may be generated and updated in real-time by the master controller as it instructs the picking station and/or load-handling devices to fulfil customer orders.

It has been found that the model can troubleshoot and take corrective action. For example, if an item is not grasped correctly, the model will instruct the robotic manipulator to return the item and attempt to re-grasp it correctly. As another example, if an item is dropped in an incorrect location, the model will instruct the robotic manipulator to reacquire the item and move it to the destination cell/container.

### Training of model

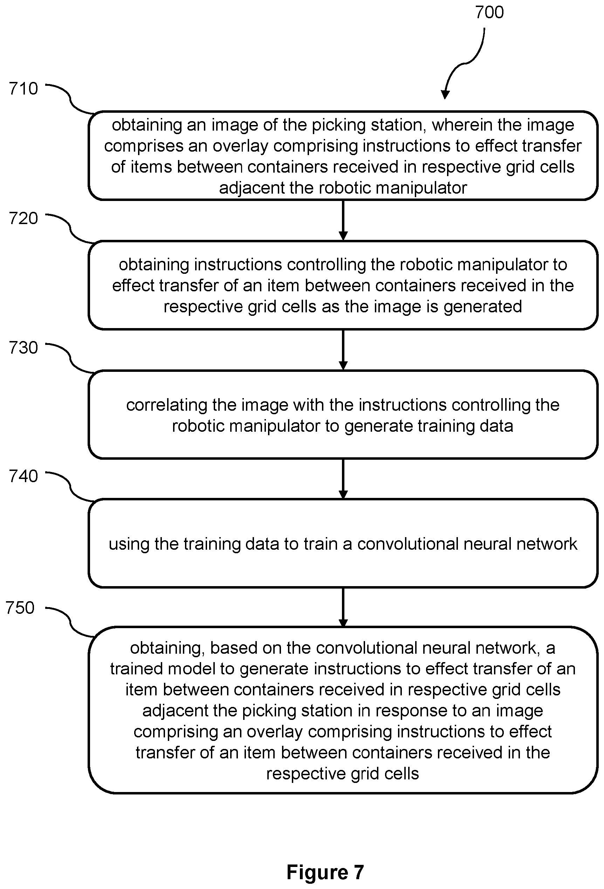

With reference to Figures 7, an aspect is described. Figure 7 shows a method 700 for training a model to control a picking station operational on a grid comprising a plurality of grid cells, the grid forming part of a grid-based storage system, the picking station comprising a robotic manipulator, wherein the robotic manipulator is configured to transfer items between containers received in respective grid cells adjacent the robotic manipulator. In general, the robotic manipulator has a number of joints (i.e. points of articulation) 300a-c to enable full mechanical degrees of freedom. That is, the end effector can 'point' in any direction along the XYZ axes in Figure 3, and rotate in pitch, roll, and yaw along an axis of the XYZ axes. Whilst the example in Figure 3 shows three joints, it will be appreciated more or fewer joints may be used.

In step 710, an image of the picking station is obtained, wherein the image comprises an overlay comprising instructions to effect transfer of an item between containers received in the respective grid cells. In effect, the overlay is generated as described above in relation to Figures 5a, 5b, and 6a-e. In step 720, instructions that control the robotic manipulator to effect transfer of items between containers received in the respective grid cells as the image is generated, are obtained. The instructions correspond to control signals input to the robotic manipulator. As the instructions controlling the robotic manipulator change so too will the image comprising the overlay. The instructions that control the robotic manipulator may be generated in response to an operator controlling the robotic manipulator.

In step 730, the instructions that control the robotic manipulator and image comprising the overlay are correlated on a temporal basis. This correlation provides training data. For example, for a given image frame, instructions that give rise to control data of the robotic manipulator is logged, where the control data includes joint angles for points of articulation, TCP pose in position and orientation, and/or a gripping state of the end-effector. This correlation may be for the real-time instructions controlling the robotic manipulator at the start of each frame of the image for example.

In step 740, the training data is used to train a model such as a neural network. The model thus learns a correlation between an image comprising the overlay and instructions to control the robotic manipulator. The model is thought to derive meaning from the overlay and elements therein in a way that enforces a certain degree of control over how the model learns to control the robotic manipulator. This is why the trained model can troubleshoot and take corrective action. If the operator is a highly skilled human in controlling the robotic manipulator, the model will in effect imitate this level of skill, but at an increased level of speed and accuracy. It has been found that the model can pick 90% of desired items faster and more accurately than a human operator. Further, the overlay avoids having to specifically inject further information into layers of the model during the training stage, so the model can converge on a solution more quickly than otherwise would be possible. That is, the image comprising the overlay provides the necessary information to the model during training.

One model that was found to be suitable is the EfficientNetV2 (https:/arxiv.org/pdf/2104.00298). The instructions for the robotic manipulator were those input to the "Control box" of the "UR10" (https://www.universal-robots.com/media/1801323/enq 199901 ur10 tech spec web a4.pdf), both by Universal Robots (RTM). In one example, the training data corresponds to about 100,000 item picks (i.e. transferring 100,000 items from one container to another container) each at about 10 seconds long, where the image comprising the overlay is about 40FPS. Both "good" (i.e. better speed and accuracy) and "bad" (i.e. lower speed and accuracy) picks were used in the about 100,000 item picks. Each of these item picks is correlated with the instructions controlling the robotic manipulator. Whilst EfficientNet was found to be suitable in terms of performance and training time/burden, in principle other models may be used such as a "You Only Look Once" (YOLO) object detection model, e.g. YOLOv8 or Scaled-YOLOv4, which has a CNN-based architecture. Other example models include neural-based approaches such as RetinatNet or R-CNN (Regions with CNN features).

In step 750, a trained model to generate instructions to effect transfer of items between containers received in the respective grid cells in response to an image comprising an overlay comprising instructions to effect transfer of items between containers received in the respective grid cells, is obtained. This model can be used in as described above in relation to Figures 5a, 5b, and 6a-e.

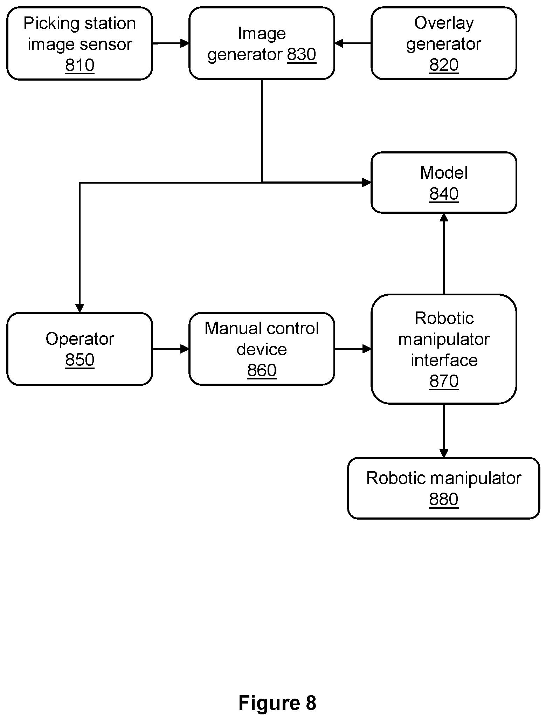

With reference to Figure 8, an aspect is described. Figure 8 shows a system 800 that may be used to carry out the method of Figure 7. A picking station image sensor 810 is combined with an overlay generator 820 by image generator 830. The picking station image sensor 810 may be an image sensor located on an end-effector of the robotic manipulator or on the robotic manipulator itself. Alternatively the image sensor may be used above the picking station. In any case, the image sensor of the picking station is used to generate a real-time feed or video of the picking station. The overlay generator is used to provide an overlay with instructions to effect an item transfer between containers. The overlay is thus updated in real-time based on when a current item is to be transferred and with each subsequent item. Image generator 830 thus combines the real-time image from the image sensor and the real-time overlay from the overlay generator. The image generator can be used obtain the image for step 710.

The image for step 710 is also provided, via a visual display unit, to the operator currently controlling the robotic manipulator. The operator understands how to interpret the overlay and control the robotic manipulator accordingly. The operator has access to a manual control device 850, such as a WireTank (RTM) "Joystick" (https://www.wiretank.com/joystick) that interfaces with robotic manipulator interface 870 to provide the instructions to the robotic manipulator 880. A manual control device allows accurate control over the robotic arm and the instructions generated by the interface can then be correlated with the image comprising the overlay at the model. That is, the human operator generates the training data of steps 720 and 730.

It will be appreciated that the overlay provided to the operator may be modified before it is used for training the model. For example, human behaviour for correcting a double pick may be subsequently indicated in the overlay used for training. For example, element 685e or equivalent can be added to the overlay used for training. A human is more likely to notice a double pick and this behaviour can be ingested by the model in part due to the additional overlay element.

It will be appreciated that the above methods and system can be applied to any environment in which a robotic manipulator transfers items between containers. For example, an environment may have an origin cell/container on a conveyor belt adjacent a stationary destination cell/container which the above methods and systems can be used to transfer items therebetween.

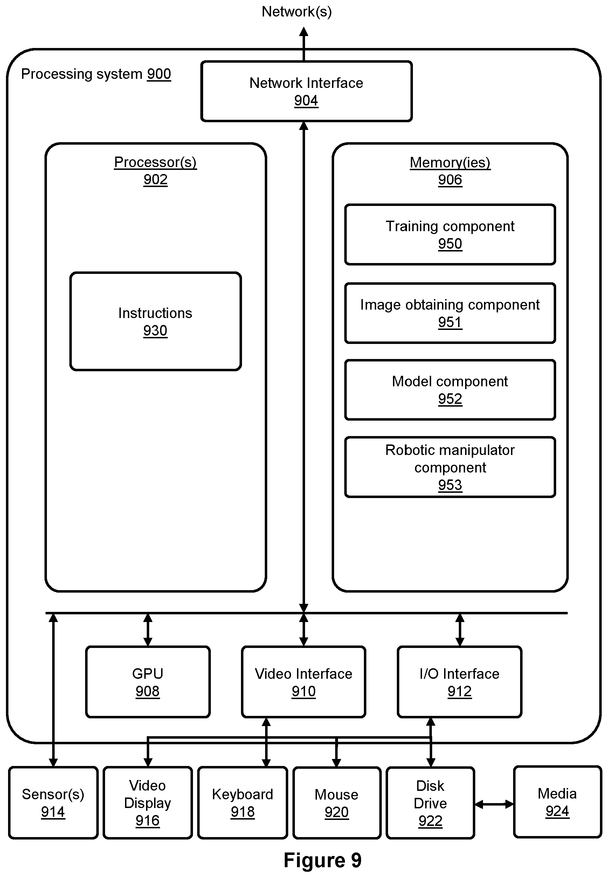

Figure 9 depicts a processing system 900 for implementing aspects described. In some aspects, processing system 900 implements logical elements from Figures 5a, 5b, 7, and 8. In this example, processing system 900 includes one or more one or more processors 902 configured to retrieve and execute instructions stored in one or more memories 906, which may be volatile memory, such as a random access memory (RAM), or a non-volatile memory, such as non-volatile random access memory (NVRAM), or the like. In this example, the one or more memories 906 include a training component 950, an image obtaining component 951, a model component 950, and a robotic manipulator component 953.

The training component 950 may be configured to train the models described above. The image obtaining component 951 may be configured to perform and/or control at least step 510 described with reference to Figure 5a and/or blocks 540, 550, and 560 described with reference to Figure 5b, and/or step 710 described with reference to Figure 7, and/or blocks 810, 820, and 830 described with reference to Figure 8. The model component 952 may be configured to perform and/or control at least step 520 described with reference to Figure 5a and/or block 570 described with reference to Figure 5b, and/or steps 730, 740, and 750 described with reference to Figure 7, and/or block 840 with reference to Figure 8. The robotic manipulator component 953 may be configured to perform and/or control at least step 530 described with reference to Figure 5a and/or blocks 580 and 590 described with reference to Figure 5b, and/or step 720 described with reference to Figure 7, and/or blocks 850 , 860, 870, and 880 with reference to Figure 8.

The one or more memories 906 may include various additional components or data useful for performing described methods in accordance with presently described aspects. Instructions 930 may generally implement any of components 950-953 for processing by the one or more processors 902. Processing system 900 may further include a graphics processing unit (GPU) 908 that is operatively connected to the one or more processors 902 and to the one or more memories 906 to offload relevant data from the one or more processors 902 and process data in parallel with the one or more processors 902. Processing system 900 may further include a video display 916 connected by a video interface 99, and various input/output devices such as a keyboard 918, mouse 920, and disk drive or solid state drive 922 connected by an I/O interface 912. In a known manner, the mouse 920 may be configured to control movement of a cursor in a video display 916, and to operate various graphical user interface (GUI) controls appearing in the video display 916 with a mouse button. The disk drive or solid state drive 922 may be configured to accept computer readable media 924.

The processing system 900 may send and receive data over a network via a network interface 904, allowing the processing system 900 to communicate with other suitably configured data processing systems, applications, or devices. Network interface 904 may generally provide data access to any sort of data network, including personal area networks (PANs), local area networks (LANs), wide area networks (WANs), the Internet, and the like. Processing system 900, which may be an example of a master controller described above, may be implemented in various ways. For example, processing system 900 may be implemented within on-site, remote, or cloud-based processing equipment

In examples employing storage to store data, the storage may be a random-access memory (RAM) such as DDR-SDRAM (double data rate synchronous dynamic random-access memory). In other examples, the storage may include non-volatile memory such as Read-Only Memory (ROM) or a solid-state drive (SSD) such as Flash memory. The storage in some cases includes other storage media, e.g. magnetic, optical or tape media, a compact disc (CD), a digital versatile disc (DVD) or other data storage media. The storage may be removable or non-removable from the relevant system.

In examples employing data processing, a processor can be employed as part of the relevant system. The processor can be a general-purpose processor such as a central processing unit (CPU), a microprocessor, a graphics processing unit (GPU), a digital signal processor (DSP), an application-specific integrated circuit (ASIC), a field-programmable gate array (FPGA) or another programmable logic device, a discrete gate or transistor logic, discrete hardware components, or any suitable combination thereof designed to perform the data processing functions described herein.

In examples involving a neural network, a specialised processor may be employed as part of the relevant system. The specialised processor may be an NPU, a neural network accelerator (NNA) or other version of a hardware accelerator specialised for neural network functions. Additionally or alternatively, the neural network processing workload may be at least partly shared by one or more standard processors, e.g. CPU or GPU.

It is also to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the accompanying claims.

In this document, "controller" is intended to include any hardware which is suitable for controlling (e.g. providing instructions to) one or more other components. For example, a processor equipped with one or more memories and appropriate software to process data relating to a component or components and send appropriate instructions to the component(s) to enable the component(s) to perform its/their intended function(s).

Furthermore, the invention can take the form of a computer program embodied as a computer-readable medium having computer executable code for use by or in connection with a computer.

Reference to an element in the singular is not intended to mean only one unless specifically so stated, but rather "one or more." The subsequent use of a definite article (e.g., "the" or "said") with an element (e.g., "the processor") is not intended to invoke a singular meaning (e.g., "only one") on the element unless otherwise specifically stated. For example, reference to an element (e.g., "a processor," "a controller," "a memory," "a transceiver," "an antenna," "the processor," "the controller," "the memory," "the transceiver," "the antenna," etc.), unless otherwise specifically stated, should be understood to refer to one or more elements (e.g., "one or more processors," "one or more controllers," "one or more memories," "one more transceivers," etc.). The terms "set" and "group" are intended to include one or more elements, and may be used interchangeably with "one or more." Where reference is made to one or more elements performing functions (e.g., steps of a method), one element may perform all functions, or more than one element may collectively perform the functions. When more than one element collectively performs the functions, each function need not be performed by each of those elements (e.g., different functions may be performed by different elements) and/or each function need not be performed in whole by only one element (e.g., different elements may perform different sub-functions of a function). Similarly, where reference is made to one or more elements configured to cause another element (e.g., an apparatus) to perform functions, one element may be configured to cause the other element to perform all functions, or more than one element may collectively be configured to cause the other element to perform the functions.

It will be understood that the above description is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

The following is a list of embodiments which may be or are claimed.
1. A computer-implemented method of controlling a picking station, the picking station comprising a robotic manipulator, wherein the robotic manipulator is configured to transfer items between containers adjacent the picking station, the method comprising:
   obtaining an image of the picking station, wherein the image comprises an overlay comprising instructions to effect transfer of an item between containers;
   processing the image with a model trained to control the robotic manipulator to transfer an item between containers; and
   using the model to control the robotic manipulator to transfer an item between containers.
2. The computer-implemented method of embodiment 1, wherein the picking station is operational on a grid comprising a plurality of grid cells, the grid forming part of a grid-based storage system, wherein the robotic manipulator is configured to transfer items between containers received in respective grid cells adjacent the robotic manipulator.
3. The computer-implemented method of embodiments 1 or 2, wherein the instructions comprise at least one of:
   at least one reference image of an item to be transferred; and/or
   a path along which an item to be transferred, moves; and/or
   a status of the robotic manipulator.
4. The computer-implemented method of embodiment 3, wherein each of the least one reference image comprises a robotic manipulator engaged with an item substantially identical to the item to be transferred and/or an item alone substantially identical to the item to be transferred.
5. The computer-implemented method of embodiments 3-4, wherein the path comprises at least one of:
   a representation of the respective grid cells or an environment comprising the containers, wherein the representation is modified to indicate the path; and/or
   a direction in which the robotic manipulator should move; and/or
   a location within a container in and/or from which an item should be placed and/or removed.
6. The computer-implemented method of embodiments 3-5, wherein the status of the robotic manipulator comprises at least one of:
   a warning signal indicating whether the robotic manipulator is functioning correctly; and/or
   an indication whether a distal end of an end-effector of the robotic manipulator is above and/or below a top-surface of the grid and/or a top edge of a container; and/or
   a location of a tool centre point of the robotic manipulator; and/or
   an engagement state of an end-effector of the robotic arm to indicate the extent to which an item is gripped by the end-effector and/or whether more than one item has been gripped.
7. The computer-implemented method of embodiments 1-6, wherein the overlay is updated in real-time.
8. The computer-implemented method of embodiments 1-7, wherein the robotic manipulator comprises an end-effector, wherein the end-effector has full mechanical degrees of freedom via orientation of the end-effector and/or via orientation of the robotic manipulator, wherein using the model to control the robotic manipulator comprises controlling the end-effector to move and/or grip and/or release an item.
9. The computer-implemented method of embodiment 8, wherein the end-effector comprises a gripping element, wherein using the model to control the robotic manipulator comprises controlling the gripping element to grip and/or release an item.
10. The computer-implemented method of embodiments 1-9, wherein the picking station comprises an image sensor, wherein obtaining the image of the picking station comprises obtaining an image from the image sensor.
11. The computer-implemented method of embodiment 10 when dependent on embodiments 8 or 9, wherein the end-effector comprises the image sensor.
12. The computer-implemented method of embodiments 10 or 11, wherein obtaining the image further comprises combining an image from the image sensor and the overlay.
13. The computer-implemented method of embodiments 2-12, wherein the picking station comprises *n-*by*-n* or *n-*by*-m* grid cells and the robotic manipulator is operational about a centre location of the *n-*by*-n* or *n-*by*-m* grid cells.
14. The computer-implemented method of embodiments 1-13, wherein the model comprises a convolutional neural network comprising:
   an input to receive the image; and
   an output to control the robotic manipulator.
15. A computer program comprising instructions which, when the program is executed by a computer, cause the computer to carry out the method of any preceding embodiment.
16. A computer readable medium comprising the computer program of embodiment 15.
17. A data processing system comprising means for carrying out the method of embodiments 1-14.
18. A system comprising:
   one or more picking stations, each picking station comprising a robotic manipulator and an image senor, wherein the robotic manipulator is configured to transfer an item between containers; and
   a processor configured to carry out the method of embodiments 1-14.
19. A computer-implemented method of training a model to control a picking station comprising a robotic manipulator, wherein the robotic manipulator is configured to transfer items between containers adjacent the robotic manipulator, the method comprising:
   obtaining an image of the picking station, wherein the image comprises an overlay comprising instructions to effect transfer of an item between containers;
   obtaining instructions controlling the robotic manipulator to effect transfer of an item between containers as the image is generated;
   correlating the image with the instructions controlling the robotic manipulator to generate training data;
   using the training data to train a convolutional neural network; and
   obtaining, based on the convolutional neural network, a trained model to generate instructions to effect transfer of an item between containers in response to an overlay comprising instructions to effect transfer of an item between containers received in the respective grid cells.
20. The computer-implemented method of embodiment 19, wherein the picking station is operational on a grid comprising a plurality of grid cells, the grid forming part of a grid-based storage system, wherein the robotic manipulator is configured to transfer items between containers received in respective grid cells adjacent the robotic manipulator.
21. The computer-implemented method of embodiments 20 or 21, wherein the instructions are obtained in response to an operator, such as a human operator, controlling the robotic manipulator.
22. The computer-implemented method of embodiment 21 wherein the robotic manipulator further comprises an interface and a manual control device, wherein the operator controls the robotic manipulator via a manual control device and the interface.
23. The computer-implemented method of embodiments 1-14, wherein the model is trained according to embodiments 19-22.
24. A computer program comprising instructions which, when the program is executed by a computer, cause the computer to carry out the method of embodiments 20-23.
25. A computer readable medium comprising the computer program of embodiment 24.
26. A data processing system comprising means for carrying out the method of embodiments 20-23.
27. A system comprising:
   one or more picking stations, each picking station comprising a robotic manipulator and an image senor, wherein the robotic manipulator is configured to transfer an item between containers; and
   a processor configured to carry out the method of embodiments 19-23.

## Claims

1. A computer-implemented method of controlling a picking station operational on a grid comprising a plurality of grid cells, the grid forming part of a grid-based storage system, the picking station comprising a robotic manipulator, wherein the robotic manipulator is configured to transfer items between containers received in respective grid cells adjacent the robotic manipulator, the method comprising:
obtaining an image of the picking station, wherein the image comprises an overlay comprising instructions to effect transfer of an item between containers received in the respective grid cells;
processing the image with a model trained to control the robotic manipulator to transfer an item between containers received in the respective grid cells; and
using the model to control the robotic manipulator to transfer an item between containers received in the respective grid cells.

2. The computer-implemented method of claim 1, wherein the instructions comprise at least one of:
at least one reference image of an item to be transferred; and/or
a path along which an item to be transferred, moves; and/or
a status of the robotic manipulator.

3. The computer-implemented method of claim 2, wherein each of the least one reference image comprises a robotic manipulator engaged with an item substantially identical to the item to be transferred and/or an item alone substantially identical to the item to be transferred.

4. The computer-implemented method of claims 2-3, wherein the path comprises at least one of:
a representation of the respective grid cells wherein the representation is modified to indicate the path; and/or
a direction in which the robotic manipulator should move; and/or
a location within a container in and/or from which an item should be placed and/or removed.

5. The computer-implemented method of claims 2-4, wherein the status of the robotic manipulator comprises at least one of:
a warning signal indicating whether the robotic manipulator is functioning correctly; and/or
an indication whether a distal end of an end-effector of the robotic manipulator is above and/or below a top-surface of the grid; and/or
a location of a tool centre point of the robotic manipulator; and/or
an engagement state of an end-effector of the robotic arm to indicate the extent to which an item is gripped by the end-effector and/or whether more than one item has been gripped.

6. The computer-implemented method of claims 1-5, wherein the overlay is updated in real-time.

7. The computer-implemented method of claims 1-6, wherein the robotic manipulator comprises an end-effector, wherein the end-effector has full mechanical degrees of freedom via orientation of the end-effector and/or via orientation of the robotic manipulator, wherein using the model to control the robotic manipulator comprises controlling the end-effector to move and/or grip and/or release an item, wherein the end-effector comprises an image sensor, wherein obtaining the image of the picking station comprises obtaining an image from the image sensor.

8. The computer-implemented method of claim 7, wherein obtaining the image further comprises combining an image from the image sensor and the overlay.

9. The computer-implemented method of claims 1-8, wherein the model comprises a convolutional neural network comprising:
an input to receive the image; and
an output to control the robotic manipulator.

10. A computer-implemented method of training a model to control a picking station operational on a grid comprising a plurality of grid cells, the grid forming part of a grid-based storage system, the picking station comprising a robotic manipulator, wherein the robotic manipulator is configured to transfer items between containers received in respective grid cells adjacent the robotic manipulator, the method comprising:
obtaining an image of the picking station, wherein the image comprises an overlay comprising instructions to effect transfer of an item between containers received in the respective grid cells;
obtaining instructions controlling the robotic manipulator to effect transfer of an item between containers received in respective grid cells adjacent the picking station as the image is generated;
correlating the image with the instructions controlling the robotic manipulator to generate training data;
using the training data to train a convolutional neural network; and
obtaining, based on the convolutional neural network, a trained model to generate instructions to effect transfer of an item between containers received in respective grid cells adjacent the picking station in response to an overlay comprising instructions to effect transfer of an item between containers received in the respective grid cells.

11. The computer-implemented method of claim 10, wherein the instructions are obtained in response to an operator, such as a human operator, controlling the robotic manipulator.

12. The computer-implemented method of claim 10 wherein the robotic manipulator further comprises an interface and a manual control device, wherein the operator controls the robotic manipulator via a manual control device and the interface.

13. The computer-implemented method of claims 1-9, wherein the model is trained according to claims 10-12.

14. A computer program comprising instructions which, when the program is executed by a computer, cause the computer to carry out the method of claims 1-13.

15. A system comprising:
a grid comprising a plurality of grid cells forming part of a grid-based storage system;
one or more picking stations mounted on the grid, each picking station comprising a robotic manipulator and an image senor, wherein the robotic manipulator is configured to transfer an item between containers received in the respective grid cells; and
a processor configured to carry out the method of claims 1-13.
